# EUROPÄISCHE PATENTSCHRIFT

(11) **EP 2 834 125 B1**
(45) Veröffentlichungstag und Bekanntmachung des Hinweises auf die Patenterteilung: **23.10.2019**
(21) Anmeldenummer: 13726450.3
(22) Anmeldetag: 22.05.2013
(51) Int. Cl.: B61G 5/02

(54) **ABDICHTUNG EINES GELENKLAGERS FÜR EIN SCHIENENFAHRZEUG**
SEAL FOR A JOINT BEARING FOR A RAIL VEHICLE
ÉTANCHÉIFICATION D'UN PALIER À ROTULE POUR UN VÉHICULE FERROVIAIRE

(30) Priorität: 26.06.2012 DE 102012210873
(43) Veröffentlichungstag der Anmeldung: 11.02.2015
(73) Patentinhaber: Siemens Mobility GmbH, 81739 München (DE)
(72) Erfinder: DIECKMANN, Maik, 48249 Dülmen (DE)
(86) Internationale Anmeldenummer: PCT/EP2013/060440
(87) Internationale Veröffentlichungsnummer: WO 2014/000978

(56) Entgegenhaltungen:
- DE-A1- 2 030 481
- DE-B- 1 110 200
- FR-A1- 2 695 612
- US-A1- 2002 150 421

## Beschreibung

Die Erfindung betrifft ein Gelenklager eines Schienenfahrzeugs mit einem Lagergehäuse und einer am Lagergehäuse anliegenden Gelenkpfanne.

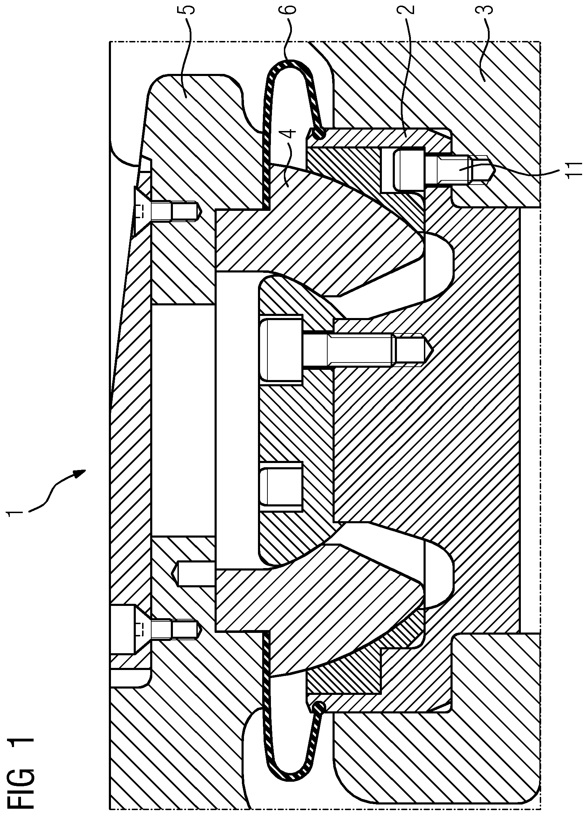

Gelenklager zur Verbindung zweier Wagenkästen eines Schienenfahrzeugs sind bekannt, z.B. aus der Niederflur-U-Bahn der Rheinbahn Düsseldorf des Baujahrs 2006. Ein solches Gelenklager ist in Fig. 1 dargestellt. Es weist ein Lagergehäuse (3) auf, welches an einem ersten Wagenkasten des Schienenfahrzeugs angeordnet ist, und eine im Lagergehäuse (3) eingebettete Gelenkpfanne (2) zur Aufnahme eines Gelenkkopfs (4) zur beweglichen Lagerung eines benachbarten, zweiten Wagenkastens des Schienenfahrzeugs. Der zweite Wagenkasten stützt sich seinerseits auf dem Gelenkkopf (4) ab. Die Gelenkpfanne (2) und das Lagergehäuse (3) sind beispielsweise durch einen O-Ring gegeneinander abgedichtet. Zur Aufnahme des O-Rings weist die Gelenkpfanne (2) auf ihrer Außenseite eine umlaufende Ringnut (8) auf. In den Bereich oberhalb der Ringnut (8) kann weiterhin Feuchtigkeit oder Schmutz in den Spalt zwischen der Gelenkpfanne (2) und dem Lagergehäuse (3) eindringen und zu Korrosion führen.

Auch die Druckschriften DE 20 30 481 A1, DE 11 10 200 B und US 2002/0150421 A1 offenbaren gattungsgemäße Gelenklager.

Der Erfindung liegt die Aufgabe zugrunde, Korrosion an einer Gelenkpfanne und/oder an einem Lagergehäuse eines Gelenklagers kostengünstig zu vermeiden.

Gelöst wird die Aufgabe durch den Gegenstand der unabhängigen Patentansprüche 1 und 8. Weiterbildungen und Ausgestaltungen der Erfindung finden sich in den Merkmalen der jeweils abhängigen Patentansprüche wieder.

Ein erfindungsgemäßes Gelenklager für ein Schienenfahrzeug umfasst eine Gelenkpfanne und ein Lagergehäuse, wobei die Gelenkpfanne mit dem Lagergehäuse verbunden ist, insbesondere an ihm anliegt, wobei die Gelenkpfanne einen umlaufenden Kragen aufweist und wobei das Gelenklager fürderhin eine Dichtung zwischen Lagergehäuse und Gelenkpfanne aufweist, welche zwischen dem Kragen und dem Lagergehäuse angeordnet ist, welche beispielsweise zwischen dem Kragen und dem Lagergehäuse dichtend vorgespannt ist, zur Abdichtung der Gelenkpfanne zum Lagergehäuse, um ein Eindringen von Schmutz und/oder Feuchtigkeit und daraus entstehende Korrosion zwischen Gelenkpfanne und Lagergehäuse zu verhindern.

Einer Ausführungsform gemäß weist die Gelenkpfanne eine rotationssymmetrische Mantelfläche auf, und das Lagergehäuse weist eine rotationssymmetrische Innenfläche auf, welche insbesondere im Wesentlichen komplementär zur rotationssymmetrischen Mantelfläche der Gelenkpfanne ausgestaltet ist. Die Gelenkpfanne ist an dem Lagergehäuse anliegend vom Lagergehäuse zumindest teilweise umgeben, wobei die Gelenkpfanne in vertikaler Richtung unterhalb des Kragens vom Lagergehäuse in horizontaler Richtung umschlossen ist. Der Kragen der Gelenkpfanne schließt die Gelenkpfanne in vertikaler Richtung ab und bildet einen ersten axialen Anschlag für die Dichtung. Er liegt auf dem Lagergehäuse auf, wodurch das Lagergehäuse einen zweiten axialen Anschlag für die Dichtung bildet, welche in vertikaler Richtung unmittelbar unter dem Kragen angeordnet ist. Durch die Auflage der Gelenkpfanne auf dem Lagergehäuse ist die Dichtung gegen das Lagergehäuse bzw. gegen die Gelenkpfanne vorgespannt.

Die Dichtung kann auch beispielsweise als zähelastische Dichtmasse ausgestaltet sein, und sowohl mit dem Kragen, als auch mit dem Lagergehäuse, insbesondere stoffschlüssig, verbunden sein. Dadurch ist eine Vorspannung der Dichtung nicht zwingend erforderlich.

Gemäß einer weiteren Weiterbildung ist die Dichtung als Dichtungsmasse, insbesondere Silikon oder Werkstoffe auf Butyl- oder Polyurethanbasis umfassend, auf den Kragen oder auf das Lagergehäuse aufgetragen.

Alternativ dazu ist die Dichtung als ein um die Gelenkpfanne umlaufender Dichtungsring, insbesondere ein Elastomer oder Naturkautschuk umfassend, ausgestaltet. Dieser wird vor oder während der Montage des Gelenklagers zwischen den Kragen der Gelenkpfanne und das Lagergehäuse, insbesondere um die Gelenkpfanne, gelegt, insbesondere unter den Kragen der Gelenkpfanne. Auch die Dichtungsmasse wird vor dem Anlegen der Gelenkpfanne an das Lagergehäuse zwischen dem Kragen der Gelenkpfanne und dem Lagergehäuse angeordnet, insbesondere dadurch, dass die Dichtungsmasse auf den Kragen und/oder auf die korrespondierenden Bereiche des Lagergehäuses aufgebracht, beispielsweise aufgespritzt wird.

Der Dichtungsring ist nach einem Ausgestaltungsbeispiel als ein Flachdichtungsring mit einer im Querschnitt im Wesentlichen rechteckförmigen Schnur ausgestaltet.

Die Dichtung, Dichtungsmasse oder Dichtungsring, weist weiterbildungsgemäß eine Dicke von zumindest 0,5 mm auf. Handelt es sich bei dem Dichtungsring um einen O-Ring mit einem kreisförmigen Querschnitt der Schnur, beträgt der Durchmesser der Schnur entsprechend zumindest 0,5 mm.

Vorgespannt wird die Dichtung mit einer vorgegebenen Vorspannung insbesondere durch ein Einpressen oder Verschrauben der Gelenkpfanne in das Lagergehäuse.

Das Gelenklager weist insbesondere einen Gelenkkopf auf, welches in der Gelenkpfanne zur drehbaren Lagerung relativ zur Gelenkpfanne angeordnet ist. Die Gelenkpfanne ist insbesondere fest mit dem Lagergehäuse verbunden. Das Lagergehäuse seinerseits ist beispielsweise an einem Endträger eines ersten Wagenkastens des Schienenfahrzeugs angeordnet und mit diesem gegebenenfalls stoffschlüssig verbunden. Der Gelenkkopf ist an einem weiteren, zweiten Wagenkasten des Schienenfahrzeugs angeordnet, welcher somit drehbar zum Lagergehäuse und damit zum ersten Wagenkasten mit diesem über das Gelenklager verbunden ist. Der Gelenkkopf weist insbesondere eine zum Teil kugelförmige Außenkontur als Gleitfläche auf, wobei die Gelenkpfanne eine dazu komplementäre Gleitfläche aufweist, an welchen Gleitflächen sie sich, unter Umständen unter Zwischenlage eines Gleitmittels, wie Fett oder Öl, berühren. Alternativ fungieren Gelenkkopf und Gelenkpfanne als Innen- und Außenring eines Wälzlagers mit dazwischen angeordneten Wälzkörpern.

Ein Schienenfahrzeug weist zumindest ein erfindungsgemäßes Gelenklager auf, insbesondere zwischen einem ersten Wagenkasten und einem zweiten Wagenkasten des Schienenfahrzeugs, um den zweiten Wagenkasten am ersten Wagenkasten und gegenüber diesem drehbar zu lagern.

Zur weiteren Abdichtung von Gelenkpfanne und Gelenkkopf, um ein Eindringen von Schmutz und/oder Feuchtigkeit und daraus entstehende Korrosion zwischen Gelenkpfanne und Gelenkkopf zu verhindern, ist beispielsweise am Kragen der Gelenkpfanne ein elastischer, insbesondere torsionselastischer Balg angeordnet, welcher mit dem zweiten Wagenkasten verbunden ist.

Gemäß einer weiteren Ausprägung ist anstelle des Balgs eine Dichtlippe, insbesondere ein Elastomer, beispielsweise Gummi umfassend, zur Abdichtung von Gelenkpfanne und Gelenkkopf an der Gelenkpfanne oder am Gelenkkopf im festen Sitz angeordnet, welche, insbesondere radial, gegen den Gelenkkopf oder die Gelenkpfanne vorgespannt ist.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt ein Gelenklager des Stands der Technik im Schnitt,
- Fig. 2: zeigt eine Detailsicht des Gelenklagers aus Fig. 1,
- Fig. 3: zeigt ein erfindungsgemäßes Gelenklager im Schnitt,
- Fig. 4: zeigt eine Detailsicht des Gelenklagers,
- Fig. 5: zeigt ein Gelenklager mit einer Dichtlippe.

In Fig. 1 ist das Eingangs beschriebene Gelenklager 1 des Stands der Technik dargestellt. Eine Gelenkpfanne 2 des Gelenklagers 1 ist in einem Lagergehäuse 3 angeordnet, welches die Gelenkpfanne 2 bereichsweise umgibt. Die Gelenkpfanne 2 ist mittels Schrauben 11 im Lagergehäuse 3 lösbar befestigt. Das Lagergehäuse 3 ist hier Teil eines ersten Wagenkastens eines Schienenfahrzeugs.

Weiterhin weist das Gelenklager 1 einen Gelenkkopf 4 auf, auf welchem ein weiterer Teil eines zweiten Wagenkastens 5 des Schienenfahrzeugs aufliegt. Der zweite Wagenkasten 5 ist somit drehbar gegenüber der Gelenkpfanne 2 und dem Lagergehäuse 3 gelagert.

Zwischen Gelenkkopf 4 und zweitem Wagenkasten 5, hier ist der Einfachheit halber nur ein Teil des zweiten Wagenkastens 5 skizziert, ist ein Balg 6, insbesondere aus einem elastischen Material, wie z.B. Gummi, befestigt, beispielsweise zwischen Gelenkkopf 4 und zweitem Wagenkasten 5 geklemmt. Der Balg 6 ist elastisch in axialer Richtung des Gelenklagers 1, hier in vertikaler Richtung, als auch um die Achse des Gelenklagers 1. Er dient dem Schutz vor eindringender Feuchtigkeit und/oder Schmutz in das Gelenklager 1. Gelenkpfanne 2, Gelenkkopf 4 und Balg 6 sind rotationssymmetrisch ausgestaltet und konzentrisch zueinander angeordnet.

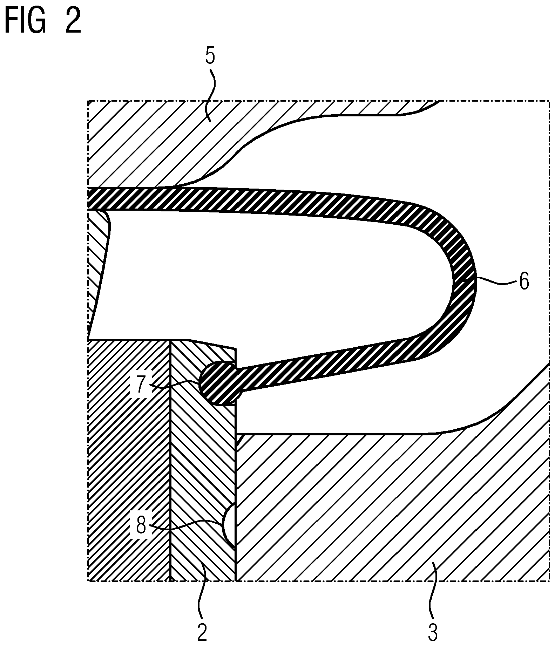

In Fig. 2 ist der Bereich der Verbindung des Balgs 6 mit der Gelenkpfanne 2 detailliert veranschaulicht. Die Gelenkpfanne 2 weist eine auf ihrer Außenseite verlaufende Ringnut 7 auf, in welcher der Balg 6 gehaltert ist.

Unterhalb des Balgs weist die Gelenkpfanne 2 eine weitere Ringnut 8 auf, zur Aufnahme eines O-Rings zur Abdichtung des Lagergehäuses 3 zur Gelenkpfanne 2. Der Bereich oberhalb des O-Rings ist jedoch vor eindringender Feuchtigkeit und/oder Schmutz und damit einhergehender Korrosion nicht geschützt. Eine Spielpassung zwischen Gelenkpfanne 2 und Lagergehäuse 3 ist mittels des O-Rings ebenfalls schwer abzudichten, insbesondere bei, beispielsweise durch Lochfraßkorrosion, vorgeschädigter Oberfläche des Lagergehäuses 3.

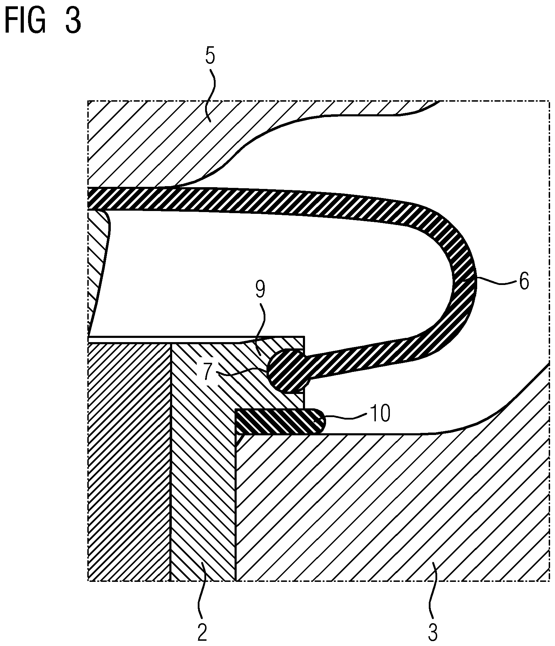

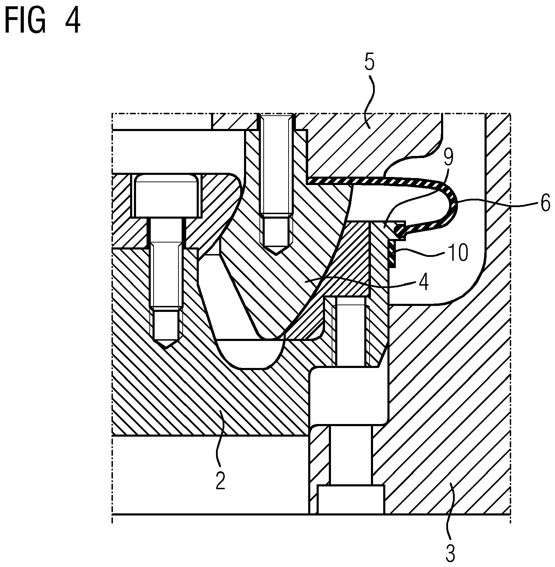

Fig. 3 zeigt nun einen Detailschnitt eines erfindungsgemäßen Gelenklagers 1. Die Gelenkpfanne 2 weist einen umlaufenden Kragen 9 auf. Das Lagergehäuse 3 weist eine zum Kragen entsprechend komplementäre Oberfläche auf. Die Gelenkpfanne 2 kann sich über den Kragen 9 am Lagergehäuse 3 abstützen. Zwischen dem Kragen 9 und dem Lagergehäuse 3 ist eine Dichtung 10 angeordnet. Hier ist eine Dichtmasse zwischen dem Kragen 9 und dem Lagergehäuse 3 vorgesehen. Der Kragen 9, wie auch die zum Kragen komplementäre Oberfläche des Lagergehäuses 3 wirken als axiale Anschläge für die Dichtung 10. Die Dichtmasse ist beispielsweise als vorkonfektioniertes Band in rechteckiger Form erhältlich. Die Anordnung des Bandes vor dem Einsetzen empfiehlt sich in vertikaler Position, wie in Fig. 4 skizziert. So wird auch bei hohen Toleranzen im Spalt zwischen dem Kragen 9 und dem Lagergehäuse 3 der Spalt verschlossen, da sich die Dichtmasse radial im Spalt ausbreitet. Dadurch wird ein Eindringen von Feuchtigkeit und/oder Schmutz in den Spalt zwischen Gelenkpfanne 2 und Lagergehäuse 3 verhindert.

Bei geringen Toleranzen des Spalts zwischen Kragen 9 und Lagergehäuse 3, kann auch ein Flachdichtungsring verwendet werden. Der Flachdichtungsring weist eine Breite radial zu seiner Rotationsachse auf, welche größer ist als seine Dicke parallel zur Rotationsachse. Seine Rotationsachse verliefe in der Zeichnung koaxial zur Rotationsachse der Gelenkpfanne 2 und damit in vertikaler Richtung.

Der Balg 6 ist in einer Ringnut 7 im Kragen 9 mit der Gelenkpfanne 2 verbunden. Ohne den Balg 6 könnte die Ringnut 7 im Kragen 9 entfallen.

Die Erfindung zeichnet sich durch eine schnelle Montage aus. Ein Dichtungsring 10 ist vorkonfektionierbar und vor dem Einsetzen der Gelenkpfanne 2 in das Lagergehäuse 3 um die Gelenkpfanne 2 unterhalb des Kragens 9 zu platzieren. Alternativ ist eine, insbesondere nicht aushärtende, Dichtungsmasse einfach unter den Kragen 9 und/oder auf die komplementären Bereiche des Lagergehäuses 3 aufzutragen. Dadurch können auch unebene Oberflächen, insbesondere das Lagergehäuses 3, beispielsweise mechanisch unbearbeitete Gussflächen oder bereits durch Lochfraß angegriffene Oberflächen abgedichtet werden. Darüber hinaus ist die Erfindung anwendbar, wenn aus Festigkeitsgründen ein mechanisches Versagen der Gelenkpfanne bei Einbringung einer Nut für einen handelsüblichen O-Ring wahrscheinlich wäre.

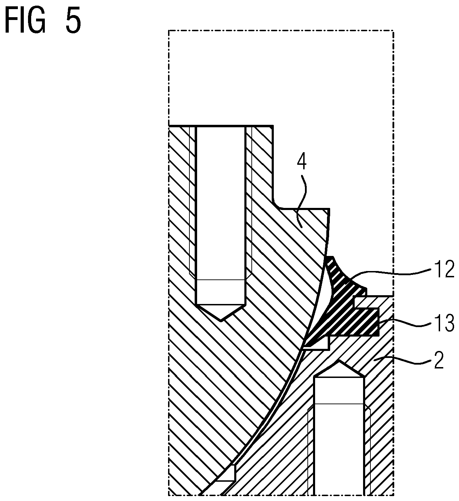

Fig. 5 zeigt eine Dichtlippe 12 anstelle des Balgs. Sie weist einen festen Sitz an der Gelenkpfanne 2, hier in einer weiteren Ringnut 13, auf und läuft an der Oberfläche des Gelenckopfs 4, gegen welchen sie vorgespannt ist.

## Patentansprüche

1. Gelenklager (1) für ein Schienenfahrzeug, mit einem Lagergehäuse (3) und einer am Lagergehäuse (3) anliegenden Gelenkpfanne (2), wobei die Gelenkpfanne (2) einen umlaufenden Kragen (9) aufweist, und wobei zwischen dem Kragen (9) und dem Lagergehäuse (3) eine Dichtung (10) zur Abdichtung des Lagergehäuses (3) zur Gelenkpfanne (2) angeordnet ist, **dadurch gekennzeichnet, dass** die Gelenkpfanne (2) unterhalb des Kragens (9) vom Lagergehäuse (3) umschlossen ist und der Kragen (9) auf dem Lagergehäuse (3) aufliegt und wobei die Dichtung (10) unmittelbar unter dem Kragen (9) angeordnet und zwischen dem Kragen (9) und dem Lagergehäuse (3) vorgespannt ist.

2. Gelenklager nach Anspruch 1,
**dadurch gekennzeichnet, dass**
die Dichtung (10) als Dichtungsmasse auf den Kragen (9) und/oder auf das Lagergehäuse (3) aufgetragen ist.

3. Gelenklager nach einem der Ansprüche 1 oder 2,
**dadurch gekennzeichnet, dass**
die Dichtung (10) als ein um die Gelenkpfanne (2) umlaufender Dichtungsring ausgestaltet ist.

4. Gelenklager nach Anspruch 3,
**dadurch gekennzeichnet, dass**
der Dichtungsring ein Flachdichtungsring mit einer im Querschnitt im Wesentlichen rechteckförmigen Schnur oder ein O-Ring mit einer im Querschnitt im Wesentlichen kreisförmigen Schnur ist.

5. Gelenklager nach einem der Ansprüche 1 bis 4,
**dadurch gekennzeichnet, dass**
in der Gelenkpfanne (2) ein Gelenkkopf (4) zur drehbaren Lagerung zumindest eines Wagenkastens (5) eines Schienenfahrzeugs zur Gelenkpfanne (2) angeordnet ist.

6. Schienenfahrzeug mit einem Gelenklager (1) nach einem der Ansprüche 1 bis 5.

7. Schienenfahrzeug nach Anspruch 6,
**dadurch gekennzeichnet, dass**
zumindest ein Wagenkasten (5) des Schienenfahrzeugs mit dem Gelenklager (1) verbunden ist, wobei ein Balg (6) mit dem Kragen (9) der Gelenkpfanne (2) und dem Wagenkasten (5) des Schienenfahrzeugs zur Abdichtung der Gelenkpfanne (2) zum Wagenkasten (5) verbunden ist.

8. Verfahren zum Herstellen eines Gelenklagers (1) nach einem Ansprüche 1 bis 4,
**dadurch gekennzeichnet, dass**
vor dem Anlegen einer Gelenkpfanne (2) an ein Lagergehäuse (3) eine Dichtung (10) zwischen einem Kragen (9) der Gelenkpfanne (2) und dem Lagergehäuse (3) angeordnet wird.

## Claims

1. Joint bearing (1) for a rail vehicle, with a bearing housing (3) and a socket (2) adjoining the bearing housing (3), wherein the socket (2) has a circumferential collar (9), and wherein a seal (10) for sealing off the bearing housing (3) from the socket (2) is arranged between the collar (9) and the bearing housing (3), **characterised in that** the socket (2) is surrounded by the bearing housing (3) below the collar (9) and the collar (9) rests on the bearing housing (3) and wherein the seal (10) is arranged immediately below the collar (9) and is pretensioned between the collar (9) and the bearing housing (3).

2. Joint bearing according to claim 1,
**characterised in that**
the seal (10) is applied to the collar (9) and/or to the bearing housing (3) as a sealing compound.

3. Joint bearing according to one of claim 1 or 2, **characterised in that**
the seal (10) is embodied as a sealing ring running around the socket (2).

4. Joint bearing according to claim 3,
**characterised in that**
the sealing ring is a flat sealing ring with a cord having a substantially rectangular cross-section or an O-ring with a cord having a substantially circular cross-section.

5. Joint bearing according to one of claims 1 to 4, **characterised in that**
a joint head (4) is arranged in the socket (2) for the rotatable bearing of at least one vehicle body (5) of a rail vehicle with respect to the socket (2).

6. Rail vehicle with a joint bearing (1) according to one of claims 1 to 5.

7. Rail vehicle according to claim 6,
**characterised in that**
at least one vehicle body (5) of the rail vehicle is connected to the joint bearing (1), wherein a bellows (6) is connected to the collar (9) of the socket (2) and the vehicle body (5) of the rail vehicle for sealing off the socket (2) from the vehicle body (5).

8. Method for manufacturing a joint bearing (1) according to one of claims 1 to 4,
**characterised in that**
before attaching a socket (2) to a bearing housing (3), a seal (10) is arranged between a collar (9) of the socket (2) and the bearing housing (3).

## Revendications

1. Palier (1) à rotule pour un véhicule ferroviaire, comprenant un corps (3) de palier et un coussinet (2) à rotule s'appliquant au corps (3) de palier, le coussinet (2) à rotule ayant un collet (9) faisant le tour, et dans lequel un joint (10) est disposé entre le collet (9) et le corps (3) de palier pour rendre le corps (3) de palier étanche par rapport au coussinet (2) à rotule, caractérisé ne ce que le coussinet (2) à rotule est entouré en dessous du collet (9) du corps de palier et le collet (9) s'applique au corps (3) de palier, et dans lequel le joint (10) est disposé directement sous le collet (9) et est précontraint entre le collet (9) et le corps (3) de palier.

2. Palier à rotule suivant la revendication 1,
**caractérisé en ce que**
le joint (10) est déposé sous la forme d'un mastic sur le collet (9) et/ou sur le corps (3) de palier.

3. Palier à rotule suivant l'une des revendications 1 ou 2, **caractérisé en ce que**
le joint (10) est conformé sous la forme d'une bague d'étanchéité entourant le coussinet (2) à rotule.

4. Palier à rotule suivant la revendication 3,
**caractérisé en ce que**
la bague d'étanchéité est une bague d'étanchéité plate ayant un cordon de section transversale sensiblement rectangulaire ou un joint torique ayant un cordon de section transversale sensiblement circulaire.

5. Palier à rotule suivant l'une des revendications 1 à 4, **caractérisé en ce que**,
dans le coussinet (2) à rotule, est disposée une tête (4) de rotule pour le montage en rotation d'au moins une caisse (5) d'un véhicule ferroviaire par rapport au coussinet (2) à rotule.

6. Véhicule ferroviaire ayant un palier (1) à rotule suivant l'une des revendications 1 à 5.

7. Véhicule ferroviaire suivant la revendication 6, **caractérisé en ce qu'**
au moins une caisse (5) du véhicule ferroviaire est reliée au palier (1) à rotule, un soufflet (6) étant, pour rendre étanche le coussinet (2) à rotule par rapport à la caisse (5), relié au collet (9) du coussinet (2) à rotule et à la caisse (5) du véhicule ferroviaire.

8. Procédé de fabrication d'un palier (1) à rotule suivant l'une des revendications 1 à 4,
**caractérisé en ce qu'**
avant de mettre un coussinet (2) à rotule sur un corps (3) de palier, on met un joint (10) entre un collet (9) du coussinet (2) à rotule et le corps (3) de palier.
